Europäisches Patentamt

European Patent Office

Office européen des brevets

(19)

(11) Veröffentlichungsnummer : **0 074 609**
**B1**

(12)                    # EUROPÄISCHE PATENTSCHRIFT

(45) Veröffentlichungstag der Patentschrift :
21.12.88

(51) Int. Cl.⁴ : **G 01 P   3/36**

(21) Anmeldenummer : **82108249.2**

(22) Anmeldetag : **08.09.82**

(54) Einrichtung zur Messung der Rotationsgeschwindigkeit.

(30) Priorität : 16.09.81 DE 3136688

(43) Veröffentlichungstag der Anmeldung :
23.03.83 Patentblatt 83/12

(45) Bekanntmachung des Hinweises auf die Patenterteilung : 21.12.88 Patentblatt 88/51

(84) Benannte Vertragsstaaten :
DE FR GB NL

(56) Entgegenhaltungen :
DE–A– 2 941 618
FR–A– 2 443 668
Die Akte enthält technische Angaben, die nach dem
Eingang der Anmeldung eingereicht wurden und die
nicht in dieser Patentschrift enthalten sind.

(73) Patentinhaber : ALCATEL N.V.
Strawinskylaan 537 (World Trade Center)
NL-1077 XX Amsterdam (NL)
FR GB NL
Standard Elektrik Lorenz Aktiengesellschaft
Hellmuth-Hirth-Strasse 42
D-7000 Stuttgart 40 (DE)
DE

(72) Erfinder : Auch, Wilfried
Weimarstrasse 6
D-7144 Asperg (DE)
Erfinder : Mohr, Friedemann
Keltenstrasse 28
D-7253 Renningen (DE)
Erfinder : Schlemper, Eberhard
Parkweg 3
D-7143 Vaihingen 7 (DE)
Erfinder : Steudle, Walter
Schönblickweg 21
D-7441 Schlaitdorf (DE)

(74) Vertreter : Schmidt, Werner, Dipl.-Phys. et al
Standard Elektrik Lorenz AG Patent- und Lizenzwesen Postfach 30 09 29
D-7000 Stuttgart 30 (DE)

EP 0 074 609 B1

**Beschreibung**

Die Erfindung geht aus von einer Einrichtung zur Messung der Rotationsgeschwindigkeit wie im Oberbegriff des Anspruchs 1 oder Anspruchs 2 angegeben.

Solche Einrichtungen sind beispielsweise in der FR-A 2 443 668 oder in dem Artikel » Techniques for Shot-Noise-Limited Inertial Rotation Measurement Using a Multiturn Fiber Sagnac Interferometer « von J. L. Davis und S. Ezekiel in Proceedings of the Society of Photo-Optical Instrumentation Engineers, Volume 157, Laser Inertial Rotation Sensors, August 30-31, 1978, San Diego, Kalifornien, Seiten 131-136" und der DE-OS 29 34 794 beschrieben.

Die bekannten Einrichtungen sind so aufgebaut, daß zur Auswertung ein Wechselspannungssignal zur Verfügung steht. Dabei wird beispielsweise so vorgegangen, daß man zusätzlich zu der durch den Sagnac-Effekt bedingten Phasendifferenz zwischen den beiden Teilstrahlen, die den Lichtweg gegensinnig durchlaufen, eine weitere Phasendifferenz erzeugt und diese so wählt, daß zur Auswertung die durch den Sagnac-Effekt bedingte Phasendifferenz kompensiert wird.

Bei diesen bekannten Einrichtungen wird zur Erzeugung der weiteren Phasendifferenz ein Modulator (z. B. ein akusto/optischer Modulator) mit einem frequenzmodulierten Signal angesteuert. Dabei ist auch der Grenzfall der Frequenzmodulation, bei dem das frequenzmodulierte Signal nur noch eine erste oder eine zweite Frequenz aufweist, erwähnt.

Es ist die Aufgabe der Erfindung, eine Einrichtung zur Messung der Rotationsgeschwindigkeit anzugeben, mit der die Messung mit großer Genauigkeit erfolgt.

Die Lösung dieser Aufgabe erfolgt mit den im Anspruch 1 oder Anspruch 2 angegebenen Mitteln. Vorteilhafte Weiterbildungen sind den abhängigen Ansprüchen zu entnehmen.

Bei der im Anspruch 1 angegebenen Lösung erhält man ein sehr stabiles Regelsignal zur Regelung der Phasendifferenz zwischen den den geschlossenen Lichtweg entgegengesetzt durchlaufenden Teilstrahlen auf einen konstanten Wert. Aus der Amplitude des Signals, aus dem dieses Regelsignal abgeleitet wird, kann, wie bei der Lösung gemäß Anspruch 2 angegeben, die Rotationsgeschwindigkeit auch direkt ermittelt werden.

Gemäß einer Weiterbildung ist es möglich. Schwankungen des Skalenfaktors (der Skalenfaktor gibt die Beziehung zwischen der vom Sagnac-Effekt verursachten Phasendifferenz zwischen den beiden Teilstrahlen und der Rotationsgeschwindigkeit an) zu berücksichtigen.

Die Erfindung wird anhand der Zeichnungen beispielsweise näher erläutert. Es zeigt

Fig. 1 ein Blockschaltbild der Einrichtung zur Messung der Rotationsgeschwindigkeit ;

Fig. 2a-2f Diagramme zur Erläuterung der Funktionsweise der Einrichtung nach Fig. 1 und

Fig. 3 ein Blockschaltbild einer Weiterbildung der Einrichtung nach Fig. 1.

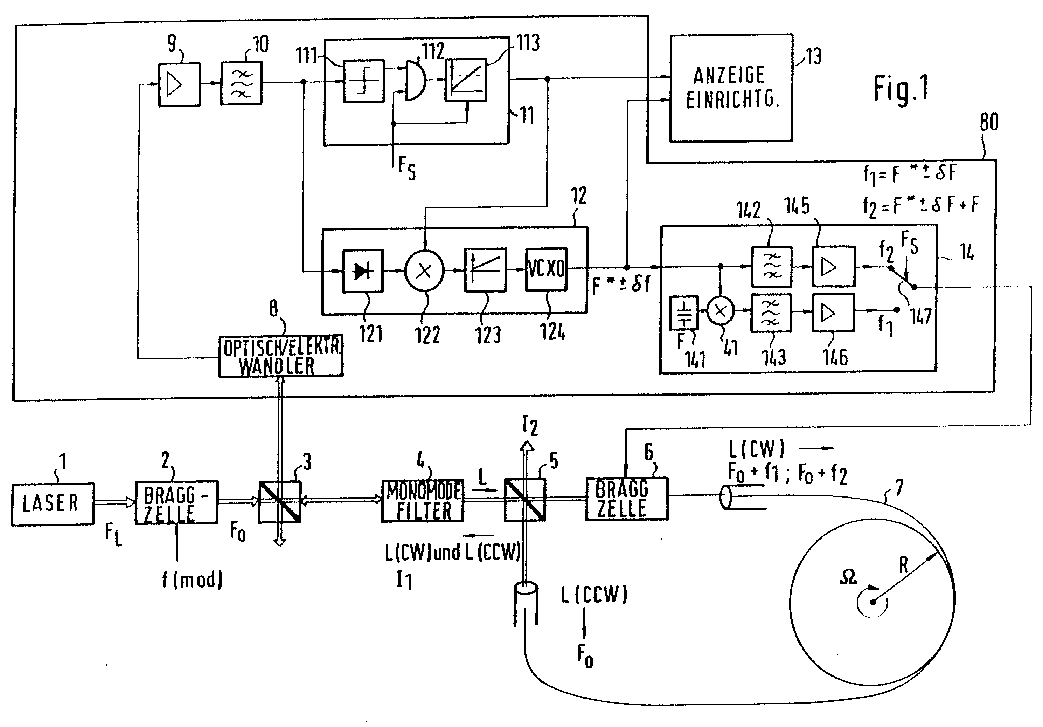

Anhand der Fig. 1 wird zunächst der Aufbau und anschließend die Funktionsweise der Einrichtung zur Messung der Rotationsgeschwindigkeit beschrieben. Ein Laser 1 erzeugt einen kohärenten Lichtstrahl mit der Frequenz $F_L$, der einer Bragg-Zelle 2 zugeführt wird, welche eine Frequenzverschiebung um die Frequenz f (mod) bewirkt. Durch diese Frequenzverschiebung um den konstanten Wert f (mod) ist die Frequenz des Ausgangssignals der Bragg-Zelle 2 $F_0 = F_L + f$ (mod).

Aufgabe dieser Bragg-Zelle ist es, zu verhindern, daß zum Laser 1 zurückreflektiertes Licht den Laser störend beeinflußt. Durch den Einsatz der Bragg-Zelle 2 hat das zurückreflektierte Licht eine andere Frequenz als das vom Laser abgegebene Licht, wodurch eine Störung des Lasers verhindert wird.

Nach dem Durchgang durch die Bragg-Zelle 2 gelangt der Lichtstrahl über einen ersten Strahlteiler 3 und ein Monomode-Filter 4 zu einem zweiten Strahlteiler 5. Im zweiten Strahlteiler 5 wird der Lichtstrahl L in zwei Teilstrahlen L(CW) und L(CCW) aufgeteilt, die jeweils in einen geschlossenen Lichtweg 7 eingekoppelt werden und diesen im Uhrzeigersinn L(CW) bzw. entgegen dem Uhrzeigersinn L(CCW) durchlaufen.

Einer der beiden Teilstrahlen (im Blockschaltbild ist es der Teilstrahl L(CW), der den geschlossenen Lichtweg im Uhrzeigersinn durchläuft) wird in einer weiteren Bragg-Zelle 6 frequenzverschoben. Um welchen Betrag eine Frequenzverschiebung erfolgt, wird weiter unten noch näher erläutert werden.

Der geschlossene Lichtweg kann auf unterschiedliche Weise realisiert werden ; z. B. durch geeignet angeordnete Spiegel. Um in diesem Fall eine große optische Weglänge zu erhalten, ordnet man die Spiegel so an, daß der Lichtweg ungefähr die Form einer Schraubenfeder, bei der die einzelnen Windungen gleichen Radius haben, hat.

Bei dem Ausführungsbeispiel wird der geschlossene Lichtweg durch einen spulenförmig angeordneten Lichtwellenleiter 7 gebildet. Der Radius einer Spulenwindung ist R. Wenn m Windungen vorgesehen sind, ist die Länge L des gesamten Lichtwegs $L = 2 R\pi m$.

Nach dem Durchlaufen des Lichtwellenleiters gelangt der eine Teilstrahl L(CW) direkt und der andere Teilstrahl L(CCW) über die Bragg-Zelle 6 wieder zu dem zweiten Strahlteiler 5.

Die Strahlteiler 3, 5 sind so beschaffen, daß ein erster Teil des Lichtstrahls, der auf einen Strahlteiler auftrifft, durchgelassen wird, ein zweiter Teil um 90° abgelenkt und danach abgetrennt wird, und ein weiterer, gegenüber dem ersten und zweiten geringer Teil, zurückreflektiert wird.

Auf den zweiten Strahlteiler 5 treffen zwei Strahlen, nämlich die Teilstrahlen L(CW) und L(CCW) auf und zwar jeweils nach dem Durchlaufen des Lichtwellenleiters 7. Diese beiden Teilstrahlen werden im Strahlteiler 5 einander überlagert. Vom Strahlteiler 5 gehen dann zwei zueinander senkrecht stehende Lichtstrahlen aus, die jeweils durch die Überlagerung der beiden Teilstrahlen entstanden sind. Ihre Intensitäten sind

$$I_1 = k \cdot \cos^2 \frac{\phi s}{2} \quad \text{und} \quad I_2 = k \cdot \sin^2 \frac{\phi s}{2}.$$

Hierbei ist k eine Konstante und $\phi_s$ die durch den Sagnac-Effekt verursachte Phasenverschiebung zwischen den beiden Teilstrahlen, auf die weiter unten noch näher eingegangen wird.

Der Lichtstrahl mit der Intensität $I_1$ gelangt über das Monomodefilter 4 zu dem ersten Strahlteiler 3 und wird von diesem zu einer Auswerteeinrichtung 80, deren Aufbau und Funktionsweise noch ausführlich erläutert wird, abgelenkt. Der Weg dieses agbelenkten Lichtstrahls steht senkrecht auf dem Weg des Lichtstrahls, der von der ersten Bragg-Zelle 2 zu dem ersten Strahlteiler 3 gelangt.

Zur Strahlführung sowie zur Ein- und Auskoppelung in die einzelnen Bauelemente und den Lichtwellenleiter sind noch weitere optische Strahlbündelungs- und Abbildungseinrichtungen notwendig. Diese sind dem Fachmann geläufig und im Blockschaltbild der Übersichtlichkeit wegen weggelassen.

Als Strahlleiter können die aus der zitierten Literaturstelle bekannten verwendet werden. Als Laser ist ein HeNe-Laser geeignet. Das Monomode-Filter ist ein Monomode-Lichtwellenleiter mit einer Länge von 10 m. Der Lichtwellenleiter 7 ist ein polarisationserhaltender Monomodelichtwellenleiter.

Wird kein polarisationserhaltender Lichtwellenleiter verwendet, dann sind zur Polarisationsregelung- und Messung weitere optische Einrichtungen notwendig. Als Bragg-Zellen sind in der Firmendruckschrift « Modulateur OEM Acousto-Optique », Bulletin MD811 der Firma Soro, 26 rue Berthollet 94110 Arcueil, Frankreich, beschriebene verwendbar. Alle verwendeten Einrichtungen sind an sich bekannt.

Die optischen Einrichtungen können ganz oder teilweise als integrierte Optik realisiert werden.

Mit Bragg-Zellen (dies sind akusto-optische Modulatoren) ist eine Frequenz-Verschiebung möglich. Ein Teil des Eingangsstrahls tritt unter einem ersten Winkel ohne Frequenzverschiebung aus der Bragg-Zelle aus und der andere Teil des Eingangstrahls tritt mit einer Frequenzverschiebung (bei einer konstanten Ansteuerfrequenz für die Bragg-Zelle erfolgt eine Frequenzverschiebung ; bei einer Ansteuerung mit veränderlichen Frequenzen eine Frequenzmodulation) unter einem zweiten Winkel aus der Bragg-Zelle aus. Der Austrittswinkel des frequenzverschobenen Ausgangsstrahls hängt von der Ansteuerfrequenz ab. Eine Verbesserung der Trennung von unverschobenem und frequenzverschobenem Strahl erreicht man auf vorteilhafte Weise dann, wenn man die Außenfläche des Kristalls der Bragg-Zelle so schleift, daß der frequenzverschobene Strahl senkrecht auf der Außenfläche steht.

Nachfolgend wird die Funktionsweise der Einrichtung zur Messung der Rotationsgeschwindigkeit, insbesondere der Auswerteeinrichtung 80, beschrieben.

Durchlaufen die beiden Teilstrahlen den spulenförmig angeordneten Lichtwellenleiter mit der Länge L gegensinnig und rotiert die Spule, deren Radius R ist, mit der Winkelgeschwindigkeit $\Omega$ um ihre Achse, dann haben die beiden Teilstrahlen nach ihrem Austritt aus dem Lichtwellenleiter eine Phasendifferenz zueinander von :

$$\phi s = \frac{4\,\pi L \Omega R}{\lambda C} \quad \text{(Sagnac-Effekt)}$$

mit

$\lambda$ : Vakuumlichtwellenlänge und
c : Vakuumlichtgeschwindigkeit.
Der Ausdruck

$$\frac{4\,\pi L \cdot R}{\lambda C}$$

enthält nur im Prinzip konstante Größen und wird als Skalenfaktor bezeichnet. Temperaturschwankungen und Druckeinwirkungen können L und R geringfügig verändern, was Fehler bei der Messung von $\Omega$ zur Folge hat.

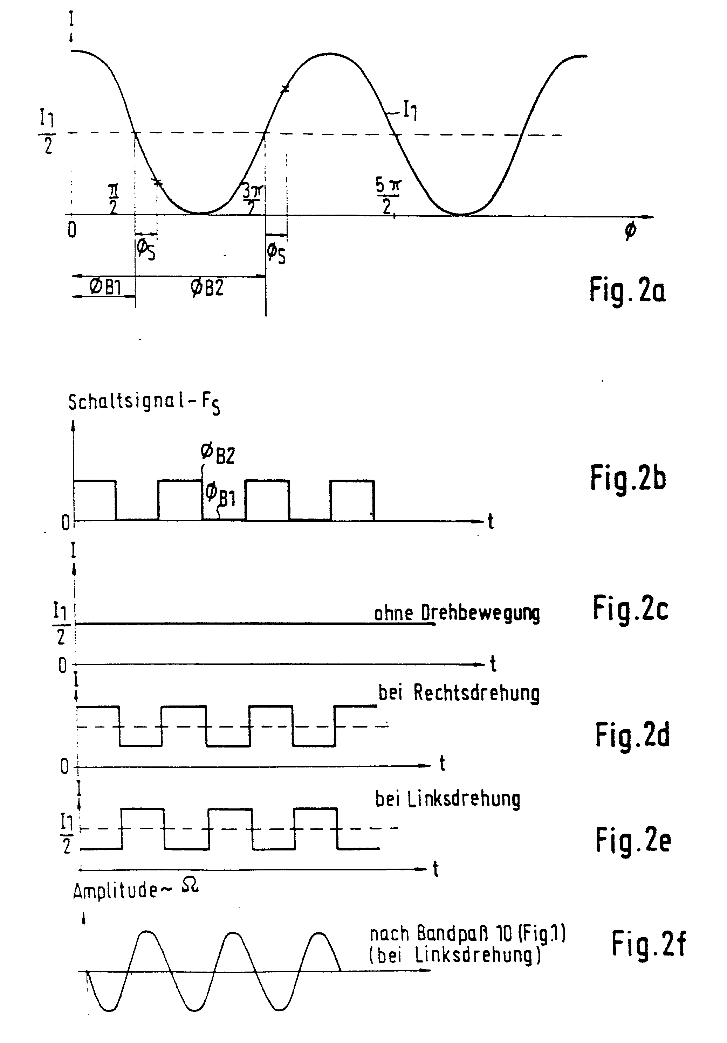

Die Auswerteeinrichtung 80 enthält einen optisch/elektrischen Wandler 8, der ein elektrisches Ausgangssignal abgibt, das zu

$$I_1 = k \cos^2 \frac{\phi s}{2}$$

direkt proportional ist. In der Fig. 2a ist der qualitative Verlauf der Intensität $I_1$ als Funktion der Phasendifferenz $\phi$ zwischen den beiden Teilstrahlen nach Durchlaufen des Lichtwellenleiters dargestellt. Es ist zu sehen, daß sich die Intensität $I_1$ für kleine Änderungen von $\phi$ (und somit auch von $\phi s$) im Bereich $\phi = 0$ kaum ändert, d. h. in diesem Bereich ist die Meßgenauigkeit gering.

Eine Verbesserung erhält man auf vorteilhafte Weise dadurch, daß man eine zusätzliche konstante

**0 074 609**

Phasenverschiebung $\phi_{B1}$ zwischen den beiden Teilstrahlen einführt. $\phi_S$ wird dann $\phi_{B1}$ überlagert. Wählt man $\phi_{B1} = \pi/2$ dann haben kleine Änderungen von $\phi_S$ eine große Änderung von $I_1$ zur Folge. Die Phasendifferenz zwischen den beiden Teilstrahlen ist dann $\phi = \phi_S + \phi_{B1}$.

Die zusätzliche Phasenverschiebung $\phi_{B1}$ wird durch die zweite Bragg-Zelle 6 erzeugt. Damit man die gewünschte Phasenverschiebung $\phi_{B1}$ zwischen den beiden Teilstrahlen erhält, muß man bei der Anordnung der Bragg-Zelle darauf achten, daß sie nicht in der Mitte des Lichtweges, d. h. im vorliegenden Fall in der Mitte des Lichtwellenleiters 7 angeordnet ist, denn dann wäre die Auswirkung auf beide Teilstrahlen gleich. Bei dem Ausführungsbeispiel ist die Bragg-Zelle an einem Ende des Lichtwellenleiters angeordnet.

Durch die Bragg-Zelle 6 wird der Teilstrahl L(CW) mit der Frequenz f1 frequenzverschoben und breitet sich somit mit der Frequenz F0 + f1 in dem Lichtwellenleiter aus. Der andere Teilstrahl L(CCW) breitet sich mit der Frequenz Fo in dem Lichtwellenleiter aus. Die Phasendifferenz $\phi_{B1}$ zwischen den beiden Teilstrahlen an den Enden des Lichtwellenleiters ist im Ruhezustand :

$$\phi_{B1} = f1 \, \frac{n \cdot L}{c} \, 2\pi, \qquad\qquad (A)$$

wobei n der Berechnungsindex des Lichtwellenleiters ist.

Bei der neuen Einrichtung zur Messung der Rotationsgeschwindigkeit wird mit der Frequenz Fs (Fig. 2b) zwischen zwei Ansteuerfrequenzen f1 und f2 für die Bragg-Zelle 6 umgeschaltet. Die Phasendifferenz bei der Ansteuerung mit f2 ist

$$\phi_{B2} = f2 \, \frac{n \cdot L}{C} \, 2\pi.$$

Die Differenz zwischen den beiden Ansteuerfrequenzen f1 und f2 wird so gewählt, daß

$$\phi_{B2} - \phi_{B1} = (2p - 1)\pi \quad \text{ist, wenn} \quad \phi_{B1} = \frac{\pi}{2}(2q - 1)\,\text{ist},$$

wobei p und q zwei voneinander unterschiedliche ganze Zahlen sind.

In diesem Fall ist nämlich (wenn $\phi_S = 0$ ist, d. h. wenn keine Rotation vorhanden ist) $I_1$ bei $\phi_{B1}$ gleich $I_1$ bei $\phi_{B2}$. Am optisch/elektrischen Wandler tritt also keine durch das Umschalten bedingte Schwankung auf (Fig. 2c).

Die obengenannte Bedingung für $\phi_{B2} - \phi_{B1}$ ist ein Spezialfall für die Wahl der Phasendifferenz zwischen $\phi_{B2}$ und $\phi_{B1}$. Allgemein ausgedrückt lautet die Bedingung für die Wahl der Ansteuerfrequenzen (und somit der Phasendifferenz) wie folgt : Die beiden Ansteuerfrequenzen f1 und f2 müssen so gewählt werden, daß bei den Phasenverschiebungen $\phi_{B1}$ und $\phi_{B2}$ $I_1$ gleiche Werte hat.

Anders dagegen verhält es sich, wenn eine Rotation vorliegt, d. h. wenn den Phasenverschiebungen $\phi_{B1}$ und $\phi_{B2}$ die Phasendifferenz $\phi_S$ überlagert wird. Jetzt hat, wie aus Fig. 2a zu entnehmen ist, $I_1$ abhängig von der jeweiligen Ansteuerfrequenz (d. h. von der unterschiedlichen Phasenverschiebung $\phi_{B1}$, $\phi_{B2}$) unterschiedliche Werte. Dies ist für eine Rechtsdrehung in der Fig. 2d und für eine Linksdrehung in der Fig. 2e dargestellt.

Solange die Messung im linearen Bereich der Kennlinie (Fig. 2a) erfolgt, ist die Differenz zwischen dem Maximal- und dem Minimalwert dieses rechteckförmigen Intensitätsverlaufs der Rotationsgeschwindigkeit $\Omega$ proportional. Eine einfache Auswertung dieser Intensitätsdifferenz ist wie nachfolgend beschrieben möglich (nicht in den Zeichnungen dargestellt) : Das Ausgangssignal des optisch/elektrischen Wandlers, das einen rechteckförmigen Verlauf hat, wird einem Bandpaß zugeführt, dessen Mittenfrequenz gleich der Umschaltfrequenz Fs ist. Das Ausgangssignal des Bandpasses ist ein sinus-förmiges Signal, dessen Amplitude A proportional zu der Rotationsgeschwindigkeit $\Omega$ ist. $\Omega$ berechnet sich nach $\Omega = k \cdot k' \cdot A$ (k und k' sind nur apparative Konstanten, die durch Eichmessungen bestimmt werden können).

Die Amplitudenmessung erfolgt auf bekannte Weise. Die Richtung der Rotation erhält man durch einen Phasenvergleich des Umschaltsignals Fs mit dem Ausgangssignal des Bandpasses.

Anstatt die Amplitude direkt auszuwerten, ist es auch möglich, die Phasendifferenz zwischen den beiden Teilstrahlen L(CW) und L(CCW) auf einen konstanten Wert zu regeln. In diesem Fall ist das Regelsignal der Rotationsgeschwindigkeit direkt proportional.

Die Regelung erfolgt vorzugsweise auf die Werte $(2p - 1)\,\pi/2$, da in diesem Fall aus den genannten Gründen die Meßgenauigkeit am größten ist. Es ist dann also

$$\phi_{B1} + \phi_S = \frac{\pi}{2}(2p - 1).$$

Zur Erzeugung der Phasendifferenz $(2q - 1)\,\pi$ zwischen den beiden Teilstrahlen nach Durchlaufen des Lichtwellenleiters wird einer der beiden Teilstrahlen frequenzverschoben (wodurch die Phasendiffe-

4

renz erzeugt wird) und zwar nacheinander mit f1 und f2. Dabei ist f1 gleich $F^* \pm \delta F$ und f2 ist gleich $F^* + F \pm \delta F$. $F^*$ ist die Frequenz eines spannungsgesteuerten Quarzoszillators 124 (nachfolgend mit VCXO abgekürzt), wenn das Regelsignal für den VCXO gleich null ist. $\delta F$ ist zu der Rotationsgeschwindigkeit $\Omega$ proportional. F ist so gewählt, daß zwischen den Teilstrahlen L(CW) und L(CCW) die gewünschte Phasendifferenz von $\pi$ erzeugt wird.

Ein Zahlenbeispiel soll dies verdeutlichen : L = 1.400 m

$$\phi_{B1} = 6\,801\,\frac{\pi}{2}\,;\quad \phi_{B2} = 6\,803 \cdot \frac{\pi}{2}$$

Daraus ergibt sich $F^* = 249{,}547$ MHz, F = 73,4 MHz ; $\delta f$ hängt von der jeweiligen Rotationsgeschwindigkeit ab und ist beispielsweise für $\Omega = 100$ Grad/h 0,105 kHz.

Nachfolgend wird erläutert, wie die Signale mit den Frequenzen f1, f2 erzeugt werden.

Wie bereits erwähnt, ist am Ausgang des optisch/elektrischen Wandlers 8 der Auswerteeinrichtung 80 ein rechteckförmiges Signal vorhanden mit einer Amplitude, die zur Rotationsgeschwindigkeit $\Omega$ proportional ist, und einer Frequenz Fs (Umschaltfrequenz zwischen f1 und f2). Dieses Signal wird einem Verstärker 9 und einem Bandpaß 10 mit der Mittenfrequenz Fs zugeführt. Das Ausgangssignal des Bandpasses 10 wird einerseits einer ersten Einrichtung 11, in der das Vorzeichen der Rotationsgeschwindigkeit ermittelt wird, und andererseits einer zweiten Einrichtung 12, in der ein dem Betrag der Rotationsgeschwindigkeit proportionales Regelsignal erzeugt wird, zugeführt.

Die Einrichtung 11 enthält eine Begrenzerschaltung 111, der eine UND-Schaltung 112 nachgeschaltet ist. Das zweite Eingangssignal der UND-Schaltung 112 ist das Schaltsignal Fs (Fig. 2b), mit dem zwischen den Ansteuerfrequenzen f1 und f2 umgeschaltet wird. Das Ausgangssignal der UND-Schaltung wird einer Integrationsschaltung mit Schwellwert 113 zugeführt. Der Schwellwert wird so gewählt, daß er bei einer Rotation im Uhrzeigersinn überschritten und im Gegenuhrzeigersinn nicht überschritten wird, d. h. je nach Rotationsrichtung gibt die Integrationsschaltung 113 ein Signal null oder ein Signal eins ab.

Der Integrationsschaltung mit Schwellwert 113 wird außerdem das Signal Fs direkt zugeführt. Es stellt die Schwellwertschaltung nach jeder Periode von Fs auf null zurück.

Das Ausgangssignal null oder eins der Integrationsschaltung mit Schwellwert 113 wird zu einer Anzeigeeinrichtung 13 geleitet und steuert dort die Richtungsanzeige. Es wird weiterhin auch zu der zweiten Einrichtung 12 geleitet.

Die Einrichtung 12 enthält hintereinandergeschaltet einen Halbwellengleichrichter 121, einen Mischer 122, eine Integrationsschaltung 123 und einen spannungsgesteuerten Quarzoszillator 124. Der Mischer 122 erhält als Mischsignal das Ausgangssignal (null oder eins) der Integrationsschaltung 113. Abhängig davon, ob das Signal null oder eins ist, wird das Vorzeichen der Amplitude des halbwellenförmigen Signals, das vom Halbwellengleichtichter 121 abgegeben wird, umgekehrt oder nicht umgekehrt. Dementsprechend hat das Ausgangssignal der Integrationsschaltung 123 ein positives oder ein negatives Vorzeichen. Abhängig vom Vorzeichen des Steuersignals für den VCXO 124 wird die Frequenz $F^*$ dessen Ausgangssignals um $\delta f$ ($\delta \sim \Omega$) vergrößert oder verkleinert. Das Signal mit der Frequenz $F^* \pm \delta F$ steuert in der Anzeigeeinrichtung 13 die Anzeige der Rotationsgeschwindigkeit. Hierzu ist in der Anzeigeeinrichtung eine Frequenzmeßeinrichtung (hierfür ist ein Zähler geeignet) vorgesehen. Von der in der Auswerteeinrichtung gemessenen Frequenz muß die konstante Frequenz $F^*$ abgezogen werden. Ein Zahlenbeispiel soll dies erläutern. In der Auswerteeinrichtung 13 wird Frequenz $F^* \pm \delta f$ gemessen. Da $F^* = 249{,}547$ MHz ist, ist $\delta f = 0{,}105$ kHz. Damit wird

$$\Omega = \frac{\phi s \cdot \lambda \cdot C}{4\,\pi L \cdot R} = 100 \text{ Grad/h}$$

Um die erwähnte Umschaltung zu erreichen, wird as Ausgangssignal des VCXO 124 einer Ansteuersignalaufbereitungsschaltung 14 zugeführt. Dort wird es über einen Bandpaß 142 einem Verstärker 145 zugeführt. Ein Oszillator 141 erzeugt ein Signal mit der Frequenz F, das, nach Mischung 41 mit dem VCXO-Ausgangssignal $F^* \pm \delta f$ über einen Bandpaß 143 einem Verstärker 146 zugeführt wird. Ein Schalter 147 schaltet mit der Frequenz Fs zwischen den Signalen mit den Frequenzen f1 = $F^* \pm \delta f$ und f2 = $F^* \pm \delta f + F$ um. Diese Signale sind die Ansteuer signale für die zweite Bragg-Zelle 6.

Die einzelnen Bauelemente und ihre Funktionsweise sind dem Fachmann an sich bekannt und werden hier deshalb nicht näher erläutert.

Bei der bisherigen Beschreibung wurde davon ausgegangen, daß nur eine zweite Bragg-Zelle 6 vorgesehen ist. Es ist jedoch auch möglich, beide Teilstrahlen über jeweils eine Bragg-Zelle dem Lichtwellenleiter zuzuführen. Die Ansteuerfrequenzen müssen dann entsprechend den obigen Überlegungen gewählt werden.

Das Meßergebnis wird von Rauschen beeinflußt. Dies wird wesentlich durch die Interferenz des in der Faser zurückgestreuten Lichts mit den den Lichtwellenleiter durchlaufenden Teilstrahlen verursacht. Das Rauschen kann man durch Einsatz von Lasern mit kleinen Kohärenzlängen reduzieren. Dies hat jedoch verschiedene Nachteile.

Eine Reduzierung der Kohärenzlänge bei Lasern, die an sich eine große Kohärenzlänge aufweisen, erzielt man auf vorteilhafte Weise dadurch, daß man den Lichtstrahl geeignet moduliert. Eine geeignete Modulation ist z. B. eine Frequenzmodulation mit einem sinusförmigen Signal oder eine statistische Modulation.

Das Modulationssignal wird vorzugsweise der ersten Bragg-Zelle 2 zugeführt. Es kann auch, wenn zwei zweite Bragg-Zellen 6 vorgesehen sind, diesen zugeführt werden. In diesem Fall muß jedoch darauf geachtet werden, daß durch diese Modulation keine zusätzlichen Schwankungen der Differenz der Frequenzen der Ausgangssignale der zweiten Bragg-Zelle verursacht werden.

Mit einer anderen Weiterbildung ist es möglich, eine Regelung durchzuführen, so daß die Lage des Arbeitspunktes (Fig. 2a), um den $\phi s$ schwankt, konstant bleibt.

Wie im beschriebenen Fall der Messungen der Rotationsgeschwindigkeit werden der Bragg-Zelle 6 (Fig. 1) nacheinander zwei Ansteuersignale mit unterschiedlichen Frequenzen f1 unf f3 zugeführt. Die Frequenzen werden jetzt jedoch so gewählt, daß die Phasendifferenz zwischen den beiden Teilstrahlen nach Durchlaufen des Lichtwellenleiters eine Phasenverschiebung von $2\pi$ oder ganzzahligen Vielfachen hiervon (wenn keine Rotation vorliegt) aufweisen. Die hierzu notwendigen Frequenzen werden wiederum nach der Gleichung

$$\phi_B = \frac{\Delta f_{mod} \cdot n \cdot L}{c} 2\pi$$

berechnet.

Die Ansteuerfrequenzen lassen sich quarzgenau festlegen und mit einer großen Stabilität konstant halten.

Wie aus dem Diagramm gemäß Fig. 2a zu entnehmen ist, hat das Ausgangssignal periodisch mit $2\pi$ gleiche Intensitäten. Dies ist auch der Fall, wenn eine Rotation vorliegt und die Phasenverschiebungen $\phi$ zwischen den beiden Teilstrahlen

$$\phi = \phi_{B1} + \phi s$$

ist. Zwischen den beiden Ansteuerfrequenzen f1, f3 wird mit der Frequenz $F_s$ umgeschaltet.

Die Auswertung erfolgt entsprechend der Auswertung der Rotationsgeschwindigkeit $\Omega$.

Um leichter zu verstehen, wie die Korrekturen erfolgen, wird zunächst, wie in Fig. 2a angegeben, angenommen, daß von Phasendifferenzen von $\pi/2$ (erzeugt mit Ansteuersignal f1) und $3\pi/2$ (erzeugt mit Ansteuersignal f2) und $5\pi/2$ (erzeugt durch f3) ausgegangen wird. Falls sich in der Gleichung (A) für $\phi_{B1}$ n oder L ändern, dann ändert sich auch die Lage des Arbeitspunktes. Dies hat zur Folge, daß die Phasendifferenz zwischen den Signalen, die man durch Ansteuern mit den unveränderten Ansteuersignalen f1, f2 und f3 erhält, nicht mehr $\pi$ und $2\pi$ sind.

Dies wird dazu ausgenützt, f3 so zu ändern, daß die Phasendifferenz wieder $2\pi$ wird. Hierzu wird die Frequenz des Ausgangssignals des VCXO 124 um $\pm F_E$ verändert, d. h. f1 $= F^* \pm F_E$. Diese Korrektur gilt für den Phasenwert bei $\phi_{B1}$. Da die Periode der Kurve für $I_1$ bei einer angenommenen Schwankung der obigen Größen einen anderen Wert als im ungestörten Zustand hat, sind Korrekturen für die Frequenzen f2 und f3 nicht ebenfalls gleich $\pm F_E$, sondern es muß der jeweilige Phasenwert berücksichtigt werden, d. h. man muß darauf achten, an welcher Stelle der Kurve für $I_1$ die Korrektur durchgeführt werden soll. Für die angenommenen Phasendifferenzen $\phi_{B1} = \pi/2$ ; $\phi_{B2} = 3\pi/2$ und $\phi_{B3} = 5\pi/2$ ändern sich (für $\Omega = 0$) die Ansteuerfrequenzen wie folgt :

$$f1 = F^* \pm F_E$$
$$f2 = F^* \pm F_E + (F \pm 2F_E)$$
$$f3 = F^* \pm F_E + 2(F \pm 2F_E)$$

Die Ansteuerfrequenzen f1, f2 und f3 sind, wenn $\Omega \neq 0$,

$$f1 = F^* \pm F_E \pm \delta f$$
$$f2 = F^* \pm F_E + 2(F \pm 2F_E) \pm \delta f$$
$$f3 = F^* \pm F_E + 2(F \pm 2F_E) \pm \delta f.$$

Liegen die Arbeitspunkte nicht, wie in Fig. 2a angegeben, bei $\pi/2$, $3\pi/2$ und $5\pi/2$, sondern, wie es bei einer Ansteuerfrequenz von ca. 249,547 MHz, ca. 249,621 MHz und ca. 249,694 MHz der Fall ist, bei Phasen von $\phi_{B1} = 6801 \cdot \pi/2$, $\phi_{B2} = 6803 \cdot \pi/2$ und $\phi_{B3} = 6805\,\pi/2$, dann werden die Ansteuerfrequenzen (bei $\Omega = 0$).

$$f1 = F^* \pm 6\,801\,F_E$$
$$f2 = F^* \pm 6\,801\,F_E + (F \pm 2F_E)$$
$$f3 = F^* \pm 6\,801\,F_E + 2(F \pm 2F_E).$$

Die Korrekturgröße $F_E$ ist ein Maß für Änderungen von n und L. Unter der Annahme, daß n konstant ist und R und L gleiche relative Änderungen erfahren, kann man für den Skalenfaktor die Änderungen von R abschätzen und berücksichtigen. Dadurch können bei der Auswertung von $\Omega$ Schwankungen von L und R berücksichtigt werden.

In dem vereinfachten Fall ($\pi/2$, $3\,\pi/2$, $5\,\pi/2$) sind $\Delta L = F_E \cdot L/f_1$ und $\Delta R = \Delta L/L \cdot R$, unter der Annahme daß $\Delta L/L = \Delta R/R$ ist.

Wenn die Korrektur erfolgen soll, wird die Auswerteeinrichtung nicht mehr direkt von den $\delta f$ angesteuert, sondern in der Auswerteeinrichtung 13 ist ein Rechner vorgesehen, der $\delta f$ in digitaler Form erhält und daraus gemäß

$$\Omega = \frac{\delta f(n \cdot \lambda)}{2(R + \Delta R)}$$

die Rotationsgeschwindigkeit $\Omega$ berechnet. $\Delta R$ wird hierzu zuvor von diesem Rechner gemäß

$$\Delta R = \frac{F_E \cdot R}{f_1}$$

berechnet.

$F_E$ wurde, wie bereits erwähnt, in der Steuereinrichtung 219 ermittelt und wird dem Rechner ebenfalls in digitaler Form zugeführt. Die übrigen Größen zur Berechnung von $\Omega$ sind konstant und im Rechner gespeichert. Dieser Rechner steuert dann die Anzeige des Betrags von $\Omega$.

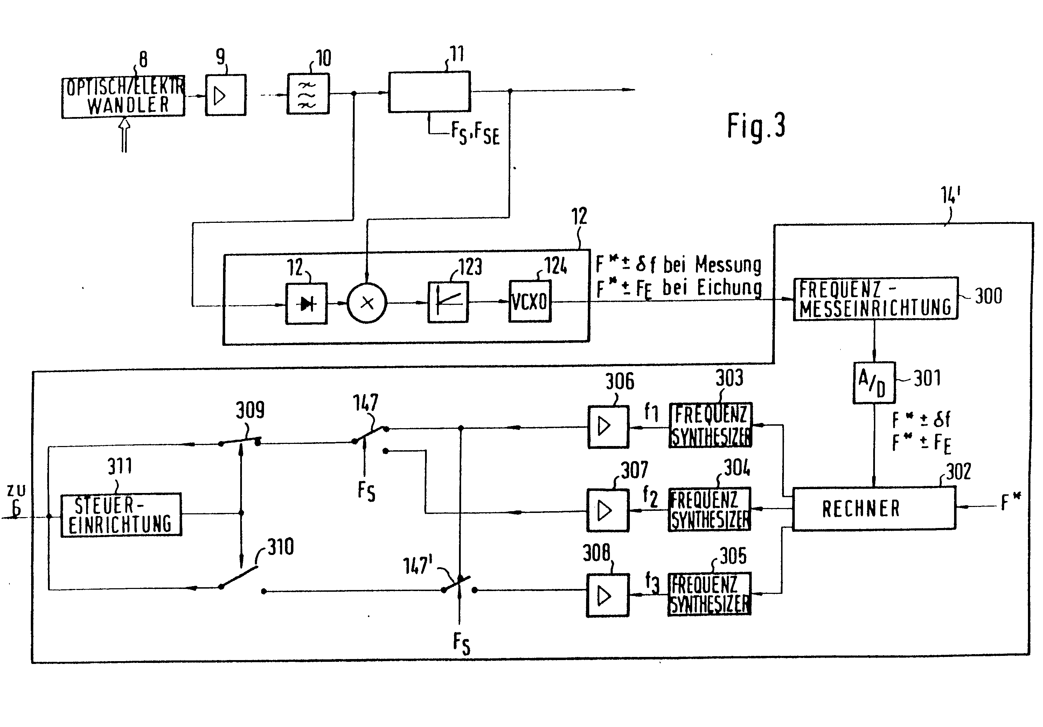

Wie eine solche Eichungseinrichtung realisiert werden kann, wird anhand der Fig. 3 erläutert.

Bei dem Ausführungsbeispiels gemäß Fig. 1 war arm Ausgang des VCXO 124 ein Signal mit der Frequenz $F^* \pm \delta f$ vorhanden. Es wird bei dem Ausführungsbeispiel gemäß Fig. 3 davon ausgegangen, daß die Betriebsarten « Messen » und « Eichen » nacheinander und nicht gleichzeitig erfolgen. Beim Messen wird mit der Frequenz Fs zwischen den Ansteuersignalen f1 und f2, beim Eichen mit der Frequenz Fs zwischen den Ansteuersignalen f1 und f3 umgeschaltet. Eine Steuereinrichtung 311 steuert einen Schalter 309 und einen Schalter 310. Die Steuereinrichtung 311 bestimmt, ob die Signale zum Messen über den Schalter 309 oder zum Eichen über den Schalter 310 weitergeleitet werden. Die Eichung erfolgt vorzugsweise zu Zeiten, während denen sich $\Omega$ nur wenig ändert. Die Steuerung kann auch durch Handbedienung ausgelöst werden.

Die Ausgangssignale des VCXO 124 haben beim Messen die Frequenz $F^* \pm \delta f$ und beim Eichen die Frequenz $F^* \pm F_E$. In einer Frequenzmeßeinrichtung 300 wird jeweils die Frequenz gemessen und über einen A/D-Wandler 301 einem Rechner 302 zugeführt. Im Rechner 302, in dem außerdem die Frequenz F* gespeichert ist, werden aus F*, F, $\delta f$ und $F_E$ Steuersignale erzeugt, die Frequenzsynthesizer 306, 307, 308 so steuern, daß sie Signale mit den Frequenzen f1, f2 und f3 abgeben.

Die Signale f1 und f2 werden dem Schalter 309 und die Signale f1 und f3 werden dem Schalter 310 zugeführt. Anstelle der drei Frequenzsynthesizer kann auch ein programmierbarer Frequenzsynthesizer vorgesehen werden.

Sollen Eichen und Messen parallel durchgeführt werden, dann müssen einige der Einrichtungen doppelt vorhanden sein, und es muß zwischen den Eich- und Meß- Ansteuersignalen mit unterschiedlichen Frequenzen, die in einem bestimmten Verhältnis zueinander stehen, umgeschaltet werden.

## Patentansprüche

1. Einrichtung zur Messung der Rotationsgeschwindigkeit mit einer einen Lichtstrahl erzeugenden Einrichtung (1), bei der Mittel (5) vorgesehen sind, die diesen Lichtstrahl in zwei Teilstrahlen, die einen geschlossenen Lichtweg (7) in entgegengesetzten Richtungen durchlaufen, aufteilen, bei der Mittel (6) vorgesehen sind, die mindestens die Frequenz von einem der beiden Teilstrahlen verschieben, so daß die beiden Teilstrahlen unterschiedliche Frequenzen haben und nach dem Durchlaufen des Lichtwegs (7) eine erste Phasendifferenz ($\phi_{B1}$) zueinander aufweisen, die, wenn die Rotationsgeschwindigkeit gleich null ist, nur von der Frequenzverschiebung abhängt, bei der ferner Mittel (3, 5) vorgesehen sind, die die beiden Teilstrahlen nach Durchlaufen des geschlossenen Lichtwegs (7) einander überlagern und den durch die Überlagerung erzeugten Lichtstrahl einem optisch/elektrischen Wandler (8) in einer Auswerteeinrichtung (80) zuführen, bei der weiterhin in der Auswerteeinrichtung zur Bestimmung der Rotationsgeschwindigkeit die durch den Sagnac-Effekt bedingte weitere Phasenverschiebung ($\phi_S$), die zusätzlich zu der ersten Phasenverschiebung ($\phi_{B1}$) vorhanden ist, auswertbar ist, bei der außerdem Mittel (12) vorgesehen sind, die zur Auswertung ein Regelsignal erzeugen, das die weitere Phasenverschiebung ($\phi_S$) kompensiert, bei der weiterhin die Rotationsgeschwindigkeit aus dem Regelsignal ermittelt wird, bei der zudem zur Anzeige der Rotationsgeschwindigkeit eine Anzeigeeinrichtung (13) vorgesehen ist und bei der weiterhin die Mittel (6) zur Verschiebung der Frequenz von mindestens einem der beiden Teilstrahlen periodisch und alternierend mit zwei unterschiedlichen Ansteuerfrequenzen (f1, f2) ansteuerbar sind, wodurch die beiden Teilstrahlen (L(CW), L(CCW)) nach Durchlaufen des geschlossenen Lichtwegs (7) abhängig von der jeweiligen Ansteuerfrequenz zwei unterschiedliche erste Phasendifferenzen ($\phi_{B1}$, $\phi_{B2}$)

zueinander haben, dadurch gekennzeichnet, daß die beiden Ansteuerfrequenzen so gewählt sind, daß die Ausgangssignale des optisch/elektrischen Wandlers (8) bei der Rotationsgeschwindigkeit ($\Omega$) null gleiche Amplituden haben, daß das Ausgangssignal des optisch/elektrischen Wandlers (8) einem Bandpaß (10), dessen Mittenfrequenz angenähert gleich der Umschaltefrequenz (Fs), mit der zwischen den beiden Ansteuerfrequenzen umgeschaltet wird, ist, zuführbar ist, und daß Mittel (12) vorgesehen sind, die aus dem Ausgangssignal des Bandpasses (10) das Regelsignal erzeugen.

2. Einrichtung zur Messung der Rotationsgeschwindigkeit mit einer einen Lichtstrahl erzeugenden Einrichtung (1), bei der Mittel (5) vorgesehen sind, die diesen Lichtstrahl in zwei Teilstrahlen, die einen geschlossenen Lichtweg (7) in entgegengesetzten Richtungen Durchlaufen, aufteilen, bei der Mittel (6) vorgesehen sind, die mindestens die Frequenz von einem der beiden Teilstrahlen verschieben, so daß die beiden Teilstrahlen unterschiedliche Frequenzen haben und nach dem Durchlaufen des Lichtwegs (7) eine erste Phasendifferenz ($\phi_{B1}$) zueinander aufweisen, die, wenn die Rotationsgeschwindigkeit gleich null ist, nur von der Frequenzverschiebung abhängt, bei der Mittel (3, 5) vorgesehen sind, die die beiden Teilstrahlen nach Durchlaufen des geschlossenen Lichtwegs (7) einander überlagern und den durch die Überlagerung erzeugten Lichtstrahl einem optisch/elektrischen Wandler (8) in einer Auswerteeinrichtung (80) zuführen, bei der weiterhin in der Auswerteeinrichtung zur Bestimmung der Rotationsgeschwindigkeit die durch den Sagnac-Effekt bedingte weitere Phasenverschiebung ($\phi_s$), die zusätzlich zu der ersten Phasenverschiebung ($\phi_{B1}$) vorhanden ist, auswertbar ist, bei der außerdem Mittel (12) vorgesehen sind, die zur Auswertung ein Regelsignal erzeugen, das die weitere Phasenverschiebung ($\phi_s$) kompensiert, bei der zudem zur Anzeige der Rotationsgeschwindigkeit eine Anzeigeeinrichtung (13) vorgesehen ist und bei der weiterhin die Mittel (6) zur Verschiebung der Frequenz von mindestens einem der beiden Teilstrahlen periodisch und alternierend mit zwei unterschiedlichen Ansteuerfrequenzen (f1, f2) ansteuerbar sind, wodurch die beiden Teilstrahlen (L(CW), L(CCW)) nach Durchlaufen des geschlossenen Lichtwegs (7) abhängig von der jeweiligen Ansteuerfrequenz zwei unterschiedliche erste Phasendifferenzen ($\phi_{B1}$, $\phi_{B2}$) zueinander haben, dadurch gekennzeichnet, daß die beiden Ansteuerfrequenzen so gewählt sind, daß die Ausgangsignale des optisch/elektrischen Wandlers (8) bei der Rotationsgeschwindigkeit ($\Omega$) null gleiche Amplituden haben, daß das Ausgangssignal des optisch/elektrischen Wandlers (8) einem Bandpaß (10), dessen Mittenfrequenz angenähert gleich der Umschaltfrequenz (Fs), mit der zwischen den beiden Ansteuerfrequenzen umgeschaltet wird, ist, zuführbar ist, und daß Mittel vorgesehen sind, die aus der Amplitude des Bandpaßausgangssignals die Rotationsgeschwindigkeit ermitteln.

3. Einrichtung zur Messung der Rotationsgeschwindigkeit nach Anspruch 2, dadurch gekennzeichnet, daß die Rotationsgeschwindigkeit aus der Amplitude A nach der Gleichung $A = k' \Omega$ ermittelbar ist, wobei k' eine apparative Konstante ist.

4. Einrichtung zur Messung der Rotationsgeschwindigkeit nach Anspruch 1, dadurch gekennzeichnet, daß zur Erzeugung des Regelsignals das Ausgangssignal des bandpasses (10) einerseits einer Einrichtung (11) zur Bestimmung der Drehrichtung und andererseits einem spannungsgesteuerten Oszillator (124) zuleitbar ist, wobei dem Oszillator eine Integrationsschaltung (123) und ein Gleichrichter (121) vorgeschaltet sind, daß zwischen den Gleichrichter (121) und die Integrationsschaltung (123) ein Mischer (122) geschaltet ist, der weiterhin mit der Einrichtung (11) zur Bestimmung der Drehrichtung verbunden ist, daß in der Anzeigeeinrichtung (13) das Ausgangssignal der Einrichtung (11) zur Bestimmung der Drehrichtung einer Drehrichtungsanzeigeeinrichtung zuführbar ist und das Ausgangssignal des spannungsgesteuerten Oszillators (124) einer Anzeigeeinheit zur Anzeige des Betrags der Rotationsgeschwindigkeit zuführbar ist, daß der spannungsgesteuerte Oszillator (124) mit Mitteln (14) zur Frequenzaufbereitung verbunden ist, in welchen die beiden Ansteuerfrequenzen (f1, f2) erzeugbar sind und in der ein Schalter (147) zum Umschalten mit der Frequenz (Fs) zwischen diesen Ansteuerfrequenzen vorgesehen ist, und daß das Ausgangssignal der Mittel (14) zur Frequenzaufbereitung den Mitteln (6) zur Verschiebung der Frequenz zuführbar ist.

5. Einrichtung zur Messung der Rotationsgeschwindigkeit nach einem der Ansprüche 1 bis 4, dadurch gekennzeichnet, daß die ersten Phasendifferenzen ($\phi_{B1}$, $\phi_{B2}$) zwischen den beiden Teilstrahlen (L(CW), L(CCW)), die durch die Frequenzverschiebung erzeugbar sind, angenähert gleich $\pi/2$ und $3\pi/2$ oder geradzahligen und ganzzahligen Vielfachen hiervon sind.

6. Einrichtung zur Messung der Rotationsgeschwindigkeit nach einem der Ansprüche 1 bis 5, dadurch gekennzeichnet, daß das Ausgangssignal der den lichtstrahl erzeugenden Einrichtung (1) frequenzmoduliert ist.

7. Einrichtung zur Messung der Rotationsgeschwindigkeit nach einem der Ansprüche 1 bis 6, dadurch gekennzeichnet, daß den Mitteln (6) zur Frequenzverschiebung zusätzlich weitere Modulationssignale zuführbar sind, deren Frequenzen so gewählt sind, daß keine Änderung der Frequenzdifferenz zwischen den Ausgangssignalen der Mittel (6) zur Frequenzverschiebung entsteht.

8. Einrichtung zur Messung der Rotationsgeschwindigkeit nach einem der Ansprüche 1 bis 7, dadurch gekennzeichnet, daß zur Ermittlung von Schwankungen der in die Messung der Rotationsgeschwindigkeit eingehenden und an sich konstanten Größen Mittel zur Durchführung von Eichungen vorgesehen sind, mit denen im Zeitmultiplex zu oder während der Messung Eichungen durchführbar sind, daß hierzu zwischen solchen Frequenzen (f1, f3) umgeschaltet werden kann, bei denen die beiden Teilstrahlen nach Durchlaufen des geschlossenen Lichtwegs (7) eine Phasenverschiebung von $2\pi$ oder ganzzahligen Vielfachen hiervon zueinander haben, wenn die Größen, deren Schwankungen bestimmt werden soll, ihre Sollwerte haben, und daß Abweichungen von diesem Wert zur Eichung verwendbar sind.

**Claims**

1. Rotation rate measuring instrument comprising a device (1) generating a light beam, means (5) for splitting this light beam into two beams which travel over a closed light path (7) in opposite directions, means (6) for shifting the frequency of at least one of the two beams so that the two beams have different frequencies and, after traversing the light path (7), have a first phase difference ($\phi_{B1}$) between them which, if the rotation rate is zero, depends only on the frequency shift, means (3, 5) which combine the two beams after passage through the closed light path (7) and direct the light beam produced by the combination to an optical-to-electric transducer (8) in an evaluating unit (80) in which the phase shift ($\phi_S$) introduced by the Sagnac effect, which is present in addition to the first phase shift ($\phi_{B1}$), can be evaluated to determine the rotation rate, means (12) for generating a control signal for evaluation purposes which compensates for the additional phase shift ($\phi_S$) and from which the rotation rate is determined, and an indicating device (13) for indicating the rotation rate, the means (6) for shifting the frequency of at least one of the two beams being drivable periodically and alternatively at two different drive frequencies (f1, f2), so that after passage through the closed light path (7), the two beams (L(CW), L(CCW)) have two different first phase differences ($\phi_{B1}$, $\phi_{B2}$) depending on the respective drive frequency, characterized in that the two drive frequencies are chosen so that the output signals of the optical-to-electric transducer (8) have equal amplitudes when the rotation rate ($\Omega$) is zero, that the output signal of the optical-to-electric transducer (8) can be applied to a band-pass filter (10) whose midband frequency is approximately equal to the frequency ($F_S$) at which switching takes place between the two drive frequencies, and that means (12) are provided for deriving the control signal from the output signal of the band-pass filter (10).

2. Rotation rate measuring instrument comprising a device (1) generating a light beam, means (5) for splitting this light beam into two beams which travel over a closed light path (7) in opposite directions, means (6) for shifting the frequency of at least one of the two beams so that the two beams have different frequencies and, after traversing the light path (7), have a first phase difference ($\phi_{B1}$) between them which, if the rotation rate is zero, depends only on the frequency shift, means (3, 5) which combine the two beams after passage through the closed light path (7) and direct the light beam produced by the combination to an optical-to-electric transducer (8) in an evaluating unit (80) in which the phase shift ($\phi_S$) introduced by the Sagnac effect, which is present in addition to the first phase shift ($\phi_{B1}$), can be evaluated to determine the rotation rate, means (12) for generating a control signal for evaluation purposes which compensates for the additional phase shift ($\phi_S$), and an indicating device (13) for indicating the rotation rate, the means (6) for shifting the frequency of at least one of the two beams being drivable periodically and alternately at two different drive frequencies (f1, f2), so that after passage through the closed light path (7), the two beams (L(CW), L(CCW)) have two different first phase differences ($\phi_{B1}$, $\phi_{B2}$) depending on the respective drive frequency, characterized in that the two drive frequencies are chosen so that the output signals of the optical-to-electric transducer (8) have equal amplitudes when the rotation rate ($\Omega$) is zero, that the output signal of the optical-to-electric transducer (8) can be applied to a band-pass filter (10) whose midband frequency is approximately equal to the frequency ($F_S$) at which switching takes place between the two drive frequencies, and that means are provided for determining the rotation rate from the amplitude of the output signal of the band-pass filter (10).

3. A rotation rate measuring instrument as claimed in claim 2, characterized in that the rotation rate can be determined from the amplitude A by the equation $A = k' \cdot \Omega$, where $k'$ is an apparatus constant.

4. A rotation rate measuring instrument as claimed in claim 1, characterized in that, to derive the control signal, the output signal of the band-pass filter (10) can be passed to a device (11) for determining the direction of rotation and to a voltage-controlled oscillator (124) preceded by an integrator (123) and a rectifier (121), that a mixer (122) connected to the device (11) for determining the direction of rotation is interposed between the rectifier (121) and the integrator (123), that in the indicating device (13), the output of the device (11) for determining the direction of rotation can be applied to a direction-of-rotation-indicating device, while the output of the voltage-controlled oscillator (124) can be applied to an indicating unit for indicating the absolute value of the rotation rate, that the voltage-controlled oscillator (124) is connected to frequency-conditioning means (14) in which the two drive frequencies (f1, f2) can be generated, and in which a switch (147) is provided for switching between these drive frequencies at the switching frequency ($F_S$), and that the output of the frequency-conditioning means (14) can be fed to the frequency-shifting means (6).

5. A rotation rate measuring instrument as claimed in any one of claims 1 to 4, characterized in that the first phase differences ($\phi_{B1}$, $\phi_{B2}$) between the two beams (L(CW), L(CCW)), which are producible by the frequency shift, are approximately equal to $\pi/2$ and $3\pi/2$ or to even and integral multiples thereof.

6. A rotation rate measuring instrument as claimed in any one of claims 1 to 5, characterized in that the output signal of the device (1) generating the light beam is frequency-modulated.

7. A rotation rate measuring instrument as claimed in any one of claims 1 to 6, characterized in that the frequency-shifting means (6) can be fed additional modulating signals whose frequencies are chosen so that there is no change in the frequency difference between the output signal of the frequency shifting means (6).

8. A rotation rate measuring instrument as claimed in any one of claims 1 to 7, characterized in that, to determine any variations of the quantities entering into the rotation rate measurement, which should actually be constant, means are provided by which calibrations can be made at or during the measurement using time-division multiplexing, that to this end, switching can be effected between frequencies (f1, f3) at which the two beams having traversed the closed light path (7) differ in phase by $2\pi$ or integral multiples thereof when the quantities whose variations are to be determined have their desired values, and that deviations from this value are usable for calibration purposes.

## Revendications

1. Appareillage de mesure de vitesse de rotation comprenant un dispositif (1) produisant un faisceau lumineux, dans lequel des moyens (5) sont prévus pour diviser ce faisceau lumineux en deux faisceaux partiels parcourant en sens opposés un trajet lumineux fermé (7), des moyens (6) sont prévus pour décaler au moins la fréquence de l'un des deux faisceaux partiels, de sorte que les deux faisceaux partiels aient des fréquences différentes et présentent entre eux une première différence de phase ($\phi_{B1}$) après avoir parcouru le trajet lumineux (7), laquelle ne dépend que du décalage en fréquence lorsque la vitesse de rotation est nulle, ainsi que d'autres moyens (3, 5) pour superposer les deux faisceaux partiels après qu'ils aient parcouru le trajet lumineux (7) et fournir le faisceau lumineux obtenu par la superposition à un convertisseur opto-électrique (8) d'un équipement d'évaluation (80), dans lequel en outre le déphasage additionnel ($\phi_S$) provoqué par l'effet Sagnac, qui s'ajoute à la première différence de phase ($\phi_{B1}$), peut être évalué dans l'équipement d'évaluation pour déterminer la vitesse de rotation, tandis que des moyens (12) sont encore prévus pour produire un signal de commande aux fins de l'évaluation, qui compense le déphasage additionnel ($\phi_S$), la vitesse de rotation étant déterminée à partir de ce signal de commande, et que, par surcroît, il est prévu un dispositif d'affichage (13) pour l'indication de la vitesse de rotation, tandis que les moyens (6) pour modifier la fréquence d'au moins un des deux faisceaux partiels sont commandés périodiquement et alternativement par deux fréquences de commande différentes (f1, f2), de sorte que les deux faisceaux partiels (L(CW), L(CCW)), après avoir parcouru le trajet lumineux fermé (7) présentent, selon la fréquence de commande respective, deux premières différences de phases ($\phi_{B1}$, $\phi_{B2}$) différentes l'une de l'autre, caractérisé en ce que les deux fréquences de commande sont choisies telles que les signaux de sortie du convertisseur opto-électrique (8) ont des amplitudes égales lorsque la vitesse de rotation ($\Omega$) est nulle, en ce que le signal de sortie du convertisseur opto-électrique (8) est fourni à un filtre passe-bande (10) dont la fréquence centrale est approximativement égale à la fréquence de commutation (Fs) selon laquelle se produit la commutation entre les deux fréquences de commande et en ce que des moyens (12) sont prévus pour produire le signal de commande à partir du signal de sortie du filtre passe-bande (10).

2. Appareillage de mesure de vitesse de rotation comprenant un dispositif (1) produisant un faisceau lumineux, dans lequel des moyens (5) sont prévus pour diviser ce faisceau lumineux en deux faisceaux partiels parcourant en sens opposés un trajet lumineux fermé (7), des moyens (6) sont prévus pour décaler au moins la fréquence de l'un des deux faisceaux partiels, de sorte que les deux faisceaux partiels aient des fréquences différentes et présentent entre eux une première différence de phase ($\phi_{B1}$) après avoir parcouru le trajet lumineux (7), laquelle ne dépend que du décalage en fréquence lorsque la vitesse de rotation est nulle, ainsi que d'autres moyens (3, 5) pour superposer les deux faisceaux partiels après qu'ils aient parcouru le trajet lumineux (7) et fournir le faisceau lumineux obtenu par la superposition à un convertisseur opto-électrique (8) d'un équipement d'évaluation (80), dans lequel en outre le déphasage additionnel ($\phi_S$) provoqué par l'effet Sagnac, qui s'ajoute à la première différence de phase ($\phi_{B1}$), peut être évalué dans l'équipement d'évaluation pour déterminer la vitesse de rotation, tandis que des moyens (12) sont encore prévus pour produire un signal de commande aux fins de l'évaluation, qui compense le déphasage additionnel ($\phi_S$), et que, par surcroît, il est prévu un dispositif d'affichage (13) pour l'indication de la vitesse de rotation, tandis que les moyens (6) pour modifier la fréquence d'au moins un des deux faisceaux partiels sont commandés périodiquement et alternativement par deux fréquences de commande différentes (f1, f2), de sorte que les deux faisceaux partiels (L(CW), L(CCW)), après avoir parcouru le trajet lumineux fermé (7) présentent, selon la fréquence de commande respective, deux premières différences de phases ($\phi_{B1}$, $\phi_{B2}$) différentes l'une de l'autre, caractérisé en ce que les deux fréquences de commande sont choisies telles que les signaux de sortie du convertisseur opto-électrique (8) ont des amplitudes égales lorsque la vitesse de rotation ($\Omega$) est nulle, en ce que le signal de sortie du convertisseur opto-électrique (8) est fourni à un filtre passe-bande (10) dont la fréquence centrale est approximativement égale à la fréquence de commutation (Fs) selon laquelle se produit la commutation entre les deux fréquences de commande et en ce que des moyens sont prévus pour déterminer la vitesse de rotation à partir de l'amplitude du signal de sortie du filtre passe-bande (10).

3. Appareillage de mesure de vitesse de rotation conforme à la revendication 2, caractérisé en ce que

**0 074 609**

la vitesse de rotation est déterminée à partir de l'amplitude A définie par la relation A = k′ Ω, dans laquelle k′ est une constante de l'appareillage.

4. Appareillage de mesure de vitesse de rotation conforme à la revendication 1, caractérisé en ce que, pour l'obtention du signal de commande, le signal de sortie du filtre passe-bande (10) est transmis, d'une part, à un dispositif (11) pour la détermination du sens de rotation et, d'autre part, à un oscillateur à commande par la tension (124), un intégrateur (123) et un redresseur (121) étant connectés à cet oscillateur, un mélangeur (122) étant connecté entre l'intégrateur (123) et le redresseur (121), lequel, en outre, est aussi couplé au dispositif (11) pour la détermination du sens de rotation, en ce que, dans le dispositif d'affichage (13), le signal de sortie du dispositif (11) pour la détermination du sens de rotation est fourni à un dispositif d'affichage du sens de rotation et en ce que le signal de sortie de l'oscillateur à commande par la tension (124) est fourni à un agencement d'affichage pour l'affichage de la valeur de la vitesse de rotation, tandis que l'oscillateur à commande par la tension (124) est couplé à des moyens (14) de traitement de fréquence, dans lesquels sont produites les deux fréquences de commande (f1, f2) et dans lesquels un commutateur (147) est disposé pour la commutation à la fréquence (Fs) entre les deux fréquences de commande, le signal de sortie des moyens (14) de traitement de fréquence étant appliqué aux moyens (6) de décalage en fréquence.

5. Appareillage de mesure de vitesse de rotation conforme à l'une quelconque des revendications 1 à 4, caractérisé en ce que les premières différences de phase ($\phi_{B1}$, $\phi_{B2}$) entre les deux faisceaux partiels (L(CW), L(CCW)), qui résultent des décalages en fréquence, sont approximativement égales à $\pi/2$ et $3\pi/2$ ou à des multiples pairs entiers de ces valeurs.

6. Appareillage de mesure de vitesse de rotation conforme à l'une quelconque des revendications 1 à 5, caractérisé en ce que le signal de sortie du dispositif (1) produisant un faisceau lumineux est modulé en fréquence.

7. Appareillage de mesure de vitesse de rotation conforme à l'une quelconque des revendications 1 à 6, caractérisé en ce que les moyens (6) de décalage en fréquence reçoivent aussi d'autres signaux de modulation dont les fréquences sont choisies de sorte qu'il ne se produise aucun changement dans la différence de fréquence entre les signaux de sortie des moyens (6) de décalage en fréquence.

8. Appareillage de mesure de vitesse de rotation conforme à l'une quelconque des revendications 1 à 6, caractérisé en ce que, pour déterminer toute variation des quantités entrant dans la mesure de vitesse de rotation, qui devraient en réalité être constantes, des étalonnages sont effectués à l'occasion de ou durant une mesure, par division dans le temps, ce qui est réalisé par une commutation entre des fréquences (f1, f3) auxquelles les deux faisceaux partiels, après avoir parcouru le trajet lumineux fermé (7), diffèrent en phase de $2\pi$ ou de multiples entiers de cette valeur, lorsque les quantités dont les variations doivent être déterminées ont leurs valeurs désirées, et en ce que les écarts par rapport à ces valeurs sont utilisés à des fins d'étalonnage.

11

Fig. 1

Fig. 2a

Schaltsignal-$F_S$

Fig. 2b

$I$

ohne Drehbewegung

Fig. 2c

bei Rechtsdrehung

Fig. 2d

bei Linksdrehung

Fig. 2e

Amplitude~ $\Omega$

nach Bandpaß 10 (Fig.1)
(bei Linksdrehung)

Fig. 2f

Fig.3

Optisch/Elektr Wandler — 8
9
10
11 — $F_S, F_{SE}$

12
12 · 123 · 124 VCXO
$F^* \pm \delta f$ bei Messung
$F^* \pm F_E$ bei Eichung

14'

FREQUENZ-MESSEINRICHTUNG — 300

A/D — 301

$F^* \pm \delta f$
$F^* \pm F_E$

306 · 303
$f_1$ FREQUENZ SYNTHESIZER

309
147

311 STEUER-EINRICHTUNG

$F_S$

307 · 304
$f_2$ FREQUENZ SYNTHESIZER

ZU 6

RECHNER — 302 — $F^*$

310
308 · 305
147'
$f_3$ FREQUENZ SYNTHESIZER

$F_S$

0 074 609